Europäisches Patentamt

**European Patent Office**

**Office européen des brevets**

(19)

(11) Numéro de publication : **0 029 383**
**B1**

(12)

# FASCICULE DE BREVET EUROPÉEN

(45) Date de publication du fascicule du brevet :
**11.05.83**

(51) Int. Cl.³ : **G 02 B 7/26**

(21) Numéro de dépôt : **80401575.8**

(22) Date de dépôt : **04.11.80**

(54) **Dispositif d'aboutement de deux fibres optiques.**

(30) Priorité : **14.11.79 FR 7928040**

(43) Date de publication de la demande :
**27.05.81 Bulletin 81/21**

(45) Mention de la délivrance du brevet :
**11.05.83 Bulletin 83/19**

(84) Etats contractants désignés :
**DE GB IT**

(56) Documents cités :
**FR A 2 282 650**
**FR A 2 390 746**
**FR A 2 395 518**
**IBM TECHNICAL DISCLOSURE BULLETIN**
**vol. 21, no. 11, avril 1979, New York US**
**L. D. COMERFORD : « Four-Pin Optical Fiber**
**Connector », pages 4688-4689**

(73) Titulaire : **THOMSON-CSF**
**173, Boulevard Haussmann**
**F-75379 Paris Cedex 08 (FR)**

(72) Inventeur : **Le Guen, Benoît**
**"THOMSON-CSF"SCPI 173, bld Haussmann**
**F-75360 Paris Cedex 08 (FR)**

(74) Mandataire : **Lepercque, Jean et al**
**THOMSON-CSF SCPI 173, Bld Haussmann**
**F-75379 Paris Cedex 08 (FR)**

Jouve, 18, rue St-Denis, 75001 Paris, France

## Dispositif d'aboutement de deux fibres optiques

La présente invention se rapporte à un dispositif d'aboutement de deux fibres optiques.

Une des applications les plus importantes des fibres optiques est la transmission optique de données, de types numériques ou analogiques. Dans ce cadre d'application, les fibres optiques constituent le canal de liaison entre des organes émetteurs ou sources, et des organes récepteurs. Le plus souvent, il est difficile ou voire impossible d'utiliser des fibres fabriquées d'un seul tenant. On doit donc réaliser des connexions fibre à fibre soit permanentes, soit amovibles. On appellera ces connexions dans ce qui suit aboutement.

Il est particulièrement important, notamment pour les liaisons optiques à grandes distances, de minimiser au maximum les pertes de transmission dues à ces aboutements. Les origines de ces pertes sont diverses : on peut citer le désalignement angulaire des deux fibres, le décalage axial, l'état de surface des extrémités de ces fibres et l'écartement résiduel de ces fibres après aboutement.

De nombreux dispositifs permettant l'aboutement de deux fibres optiques selon diverses méthodes ont été développés dans le passé. Ces dispositifs comportent en général un organe exerçant une forte pression normale à l'axe optique des fibres et maintenant celles-ci en position dans un sillon ou un profilé de guidage. Dans les dispositifs de l'art connu, lors de la fixation des fibres l'une contre l'autre, généralement assurée par une vis, il est impossible de contrôler efficacement les contraintes dûes aux efforts de vissage, du fait des procédés adoptés. Ces contraintes ont pour effet soit un écartement résiduel des fibres, soit une surpression qui risque de produire des éclats susceptibles de se glisser entre les cœurs des fibres en contact. Ce phénomène se produit surtout lorsqu'on utilise des fibres coupées au rubis synthétique, au briquet, ou au diamant, procédés qui ne donnent pas le fini d'un polissage, jugé trop onéreux dans beaucoup d'applications. Les fibres peuvent alors présenter des coupes parfois en biais de plusieurs degrés permettant toutefois leur utilisation. D'autre part, une force de pression exagérée, exercée par l'organe précité, et agissant perpendiculairement à la fibre, peut être une cause de rupture due à un profilé de guidage présentant des défectuosités ou, le plus souvent, de déformations rendant ce guidage incertain. Enfin les dispositifs de l'art connu ne permettent pas en général une reproductibilité suffisante, ce qui constitue un inconvénient majeur, les câbles de liaisons optiques comprenant le plus souvent de nombreuses paires de fibres devant être aboutées.

Pour éviter une augmentation substantielle des pertes optiques dues à un couplage défectueux des fibres optiques, d'autres dispositifs mettant en œuvre des procédés plus complexes d'aboutement ont été développés et, notamment, faisant appel à un assemblage de modules de translation à trois degrés de liberté, complétée éventuellement par une possibilité de rattrapage angulaire.

Tout au contraire, l'invention propose un dispositif qui, tout en palliant les inconvénients qui viennent d'être rappelés, ne fait appel qu'à des composants simples et peu onéreux.

Pour ce faire, il est utilisé une paire de tiges jointives maintenues en leurs seules extrémités et des moyens de pressage agissant sur des patins élastiques qui par leur action progressive font simultanément avancer les deux fibres optiques à abouter l'une vers l'autre et infléchissent la paire de tiges en lui communiquant une courbure favorisant le guidage.

Il est connu de part la demande de brevet FR-A-2 390 746 d'utiliser des tiges jointives pour former un berceau de guidage dans lequel glissent les deux fibres optiques à abouter et des moyens de pressages pour les maintenir. Cependant ces tiges sont fixes sur le fond plan d'un canal formant embase et cette disposition ne permet pas d'obvier aux difficultés sus-mentionnées.

L'invention a donc pour objet un dispositif d'aboutement de deux fibres optiques, comportant des moyens de guidage des fibres optiques à abouter comprenant une paire de tiges rectilignes jointives, de section cylindrique formant un berceau de guidage dans lequel glissent les fibres optiques, et des moyens de pressage ; caractérisé en ce que lesdits moyens de pressage agissent sur au moins un patin en matériau élastique ; le patin exerçant simultanément une force d'entraînement sur une des deux fibres, la faisant glisser dans le berceau de guidage vers l'autre fibre à abouter, et une force de flexion sur chacune des tiges, incurvant la paire de tiges.

L'invention sera mieux comprise et d'autres avantages apparaîtront à l'aide de la description qui suit, en référence aux figures annexées :

la figure 1 illustre schématiquement un défaut pouvant apparaître dans l'aboutement de deux fibres optiques selon l'art connu ;

les figures 2 à 4 illustrent différents aspects avantageux de l'invention ;

les figures 5 et 6 illustrent deux phases de l'aboutement de fibres optiques à l'aide d'un dispositif de l'invention ;

les figures 7 à 9 illustrent une réalisation concrète d'un dispositif d'aboutement selon l'invention.

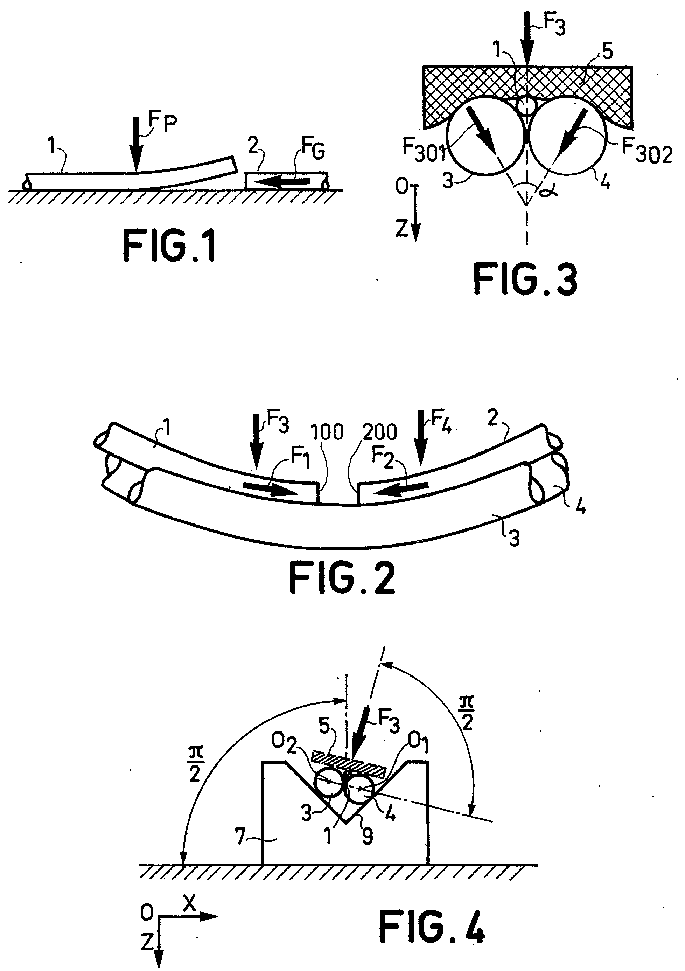

Pour abouter deux fibres optiques, tous les procédés mis en œuvre dans des dispositifs d'aboutement comprennent au moins une phase commune consistant en un rapprochement de ces deux fibres jusqu'à ce qu'elles se touchent. Pour ce faire, on conjugue en général deux actions simultanées : d'une part on maintient au moins une fibre sur une embase plane ou dans un sillon de guidage gravé dans un plan et, d'autre part, on exerce une action de rapprochement l'une vers l'autre de ces deux fibres, ou du moins de la fibre laissée libre vers la fibre déjà maintenue fixe. Le fait de maintenir une fibre contre un plan d'appui a souvent pour effet de soulever légèrement son extrémité, ce qui conduit à un défaut d'aboutement illustré schématiquement par la figure 1. On a représenté sur la figure 1 les deux fibres à abouter, respectivement 1 et 2. La fibre 1 est maintenue fixe sur un plan d'appui à l'aide d'une force de pression $F_p$. La fibre 2 est rapprochée de la fibre 1 jusqu'à aboutement à l'aide d'une force de glissement $F_G$. La figure 1 montre schématiquement de façon amplifiée le défaut pouvant apparaître lorsqu'on utilise un tel procédé d'aboutement.

Un autre défaut qui peut se présenter lors de l'aboutement est le suivant : même si les deux fibres restent parallèles au plan d'appui, du fait que leurs extrémités puissent présenter un léger biseau dû au procédé de taille comme il a été rappelé antérieurement, lors de la jonction, ces deux fibres peuvent avoir tendance à se chevaucher conduisant au même résultat défectueux que celui de la figure 1.

La figure 2 illustre un des agencements les plus importants de l'invention, palliant ce défaut. Selon l'invention, les moyens de guidage des deux fibres optiques permettant leur rapprochement sont constitués par une paire jointive de tiges rectilignes flexibles et de sections cylindriques formant berceau de guidage. Ces tiges sont maintenues en leurs seules extrémités et laissées libres dans leur partie centrale. En outre, on exerce simultanément une force de glissement sur au moins une des fibres pour réaliser l'aboutement, ceci entraîne une force de flexion sur les tiges de manière à ce qu'elles se courbent légèrement. Du fait de cette courbure, les fibres optiques ne peuvent plus présenter le défaut de la figure 1, car dans l'hypothèse où la force de maintien de la fibre contre le canal de guidage, en l'occurence la ou les forces de flexion, a pour effet de soulever légèrement l'extrémité de ces fibres. La courbure prise par ces fibres épouse donc parfaitement la courbure communiquée aux tiges formant le berceau de guidage. Il s'en suit que l'aboutement peut être effectué dans les meilleures conditions de contact des deux extrémités 100 et 200 des fibres 1 et 2. Sur la figure 2, les deux fibres sont supposées être mobiles et soumises à des forces de glissement, respectivement $F_1$ et $F_2$, ainsi qu'à des forces de flexion $F_3$ et $F_4$.

Selon un second aspect de l'invention, les forces de glissement et de flexion sont exercées à l'aide de patins en matériau élastique, c'est-à-dire déformable. Ce patin recouvre en partie, comme illustré sur la figure 3, les deux tiges 3 et 4 constituant le berceau de guidage. Lorsque le patin 5 exerce une force de flexion, symbolisé par la flèche $F_3$, sur l'ensemble constitué par les tiges de guidage 3 et 4 ainsi que la fibre 1, du fait de la déformation du matériau élastique constituant le patin, cette force peut se décomposer en deux forces $F_{301}$ et $F_{302}$ dont les directions forment entre elles un angle $\alpha$. Ces deux forces $F_{301}$ et $F_{302}$ ont pour double effet, d'une part, les tiges 3 et 4 étant maintenues en leur seule extrémité, de les cambrer et, d'autre part, de les maintenir jointives.

Selon un troisième aspect avantageux de l'invention, pour le maintien en place des deux tiges, le dispositif d'aboutement comprend un réceptacle constitué d'une embase plane surmontée de deux parois latérales, dans chacune desquelles il a été pratiqué une gorge en forme de V destinée à recevoir une des extrémités des tiges de guidage. Cette disposition, illustrée par la figure 4 sur laquelle une des parois latérales 7 est représentée, offre la possibilité d'un léger basculement du plan passant par les axes $0_1 0_2$ des fibres par rapport à l'axe de référence 0X. Cette disposition de gorge 9 en forme de V est auto-centrante et assure l'assiette correcte du berceau de guidage en dépit d'un léger désalignement de la force de flexion $F_3$ exercée sur le patin de pressage 5 par rapport à l'axe OZ. Les directions suivant lesquelles s'exercent les forces n'ont donc pas besoin d'être déterminées avec précision.

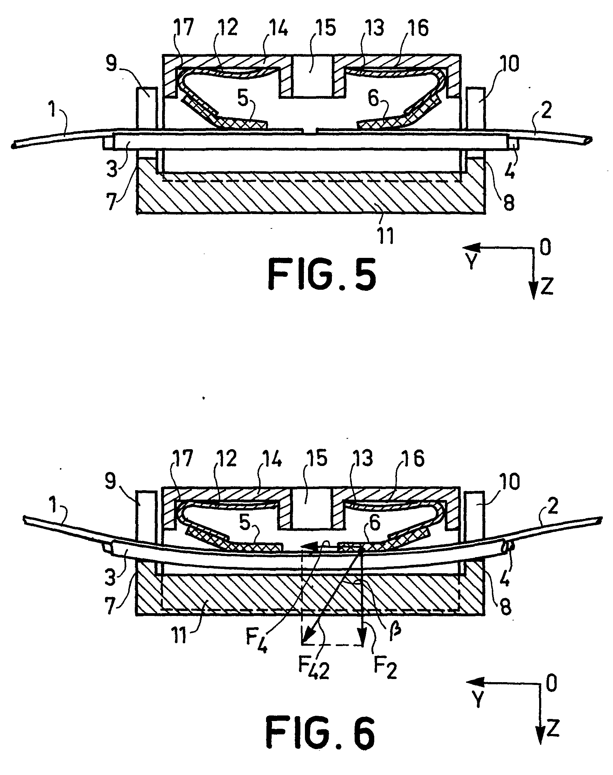

Selon un quatrième aspect de l'invention, les forces exercées sur les patins de guidage et de pressage sont obtenues à l'aide de ressorts en forme d'épingle à cheveux solidaires d'un bâti mobile. Dans un mode de réalisation préféré, une des extrémités du ressort est fixée au patin de pressage et de maintien, l'autre extrémité étant positionnée dans une alvéole pratiquée dans le bâti mobile. Cet aspect de l'invention est illustré par les figures 5 et 6.

Sur la figure 5 on retrouve, en coupe, le réceptacle comprenant l'embase 11 et ses parois latérales 7 et 8 dans lesquelles ont été pratiquées les gorges 9 et 10 en forme de V, destinées à supporter en leur extrémité les tiges formant rails de guidage 3 et 4. Le bâti de pressage 14 se présente sous la forme d'un couvercle s'emboîtant sur le réceptacle comprenant l'embase 11. Dans sa partie supérieure des alvéoles 16 et 17 ont été pratiquées pour recevoir les ressorts en épingles à cheveux 12 et 13. Au repos, l'embase et le bâti de pressage 14 sont maintenus à une distance suffisante pour que les ressorts 12 et 13 n'exercent pas de force de flexion sur les tiges 3 et 4. On peut alors glisser manuellement les fibres optiques 1 et 2 entre les rails de guidage constitués par ces tiges. Ensuite à l'aide de moyens de couplage qui seront décrits ultérieurement le bâti de pressage 14 est rapproché de l'embase 11. Il s'en suit que les ressorts 12 et 13 sont comprimés et commencent à exercer une force de flexion $F_{42}$ sur les tiges 3 et 4. Cette phase de fonctionnement du dispositif d'aboutement est illustrée par la figure 6. Lorsque le bâti 14 et l'embase 11 se rapprochent l'un de l'autre, cette force n'est plus parallèle à l'axe OZ et peut se décomposer en une force $F_4$ de glissement et une force $F_2$ de flexion. L'angle $\beta$ que forme la direction de la force $F_{42}$ avec l'axe OZ tend à augmenter lorsque le bâti 14 et l'embase 11 se rapprochent pour passer par un maximum et ensuite décroître. Il s'ensuit que, simultanément les fibres 1 et 2 se rapprochent de par l'effet de la force $F_4$ et les tiges 3 et 4 s'incurvent suivant la direction OZ de par l'effet de la force $F_2$, comme il a été décrit antérieurement. Pour la clarté de la figure une seule force $F_{42}$ a été représentée. Il doit être bien entendu que le patin 5 exerce lui aussi une force $F_{31}$ (non représentée) se décomposant comme illustré sur la figure 2, en une force $F_3$ et une force $F_1$. La profondeur des alvéoles pratiquées dans le bâti 14 doit être telle que, lorsque le bâti 14 et l'embase 11 sont rapprochés au maximum, la compression des ressorts n'y apporte aucune déformation dépassant la limite d'élasticité.

En se reportant de nouveau à la figure 5, représentant la phase initiale de l'aboutement, on voit qu'il est aisé d'introduire entre les tiges 3 et 4 les fibres optiques 1 et 2 et de les rapprocher manuellement tout en les guidant. En effet à ce stade, les ressorts 12 et 13 n'exercent pratiquement aucune force de pression sur les tiges de guidage. L'insertion des fibres est favorisée par la géométrie des patins qui présentent un décrochement comme illustré sur la figure 5. Le positionnement des fibres l'une par rapport à l'autre le long de l'axe OY n'a pas à être très précis, l'aboutement pouvant être réalisé dans une zone comprise entre les deux patins sans que ce soit obligatoirement au centre du dispositif. Ce point doit être seulement situé entre les deux patins lorsque ceux-ci se sont rapprochés l'un de l'autre au maximum (voir figure 6). Lorsque la pression va s'accentuer, les deux fibres vont glisser l'une vers l'autre jusqu'au blocage lorsque la jonction est réalisée. Ensuite le patin va glisser sur les tiges de guidage 3 et 4 et sur la fibre qui lui est associée sans exercer de contraintes préjudiciables à cette fibre. Par le procédé qui vient d'être décrit l'aboutement de deux fibres peut donc être réalisé dans les meilleures conditions, de façon reproductible, ce sans risque de détérioration des fibres à abouter. En outre pour certaines applications, les forces exercées par les patins de pressage peuvent être calibrées. Ceci peut être réalisé très simplement car l'amplitude de ces forces ne dépend que de l'écart existant entre l'embase 11 et le bâti 14 (et du coefficient d'élasticité des ressorts, objet d'un choix initial).

Le bâti 14 peut être muni en son centre d'une fenêtre 15. Cette fenêtre 15 peut servir à plusieurs usages : vérifier qu'aucune impureté ne s'est glissée entre les faces de contact des fibres, suivre le mouvement de ces fibres, injecter éventuellement un liquide d'indice, ou encore une colle liquide permettant la fixation définitive des deux fibres. Comme variante, le bâti dans son ensemble peut être réalisé dans un matériau transparent pour mieux suivre le déplacement des fibres.

En ce qui concerne les impuretés, le dispositif d'aboutement selon l'invention permet leur élimination de façon très simple. Il suffit, les ressorts étant dans la position illustrée par la figure 5, de pousser l'une des fibres manuellement. L'autre fibre recule et sort du dispositif rendant ainsi les extrémités des deux fibres accessibles. Il ne reste plus qu'à assurer le nettoyage de ces extrémités et de repousser la première fibre à l'aide de la seconde, et de recommencer l'opération d'aboutement après l'insertion de ces deux fibres et jonction dans la zone centrale du dispositif.

Les moyens de couplage du bâti 14 avec l'embase 11 peuvent être réalisés très simplement à l'aide d'un système à vis de serrage. L'une des extrémités de cette vis de serrage doit être fixe, par exemple par rapport à l'embase 11, le filetage de la vis entraînant le bâti 14 et rapprochant ces deux pièces mécaniques lorsqu'on fait tourner la vis. La tête de la vis peut être munie d'une molette d'entraînement, ou tout au contraire être munie d'une simple fente entraînable par un tournevis et affleurer à la surface extérieure du bâti 14.

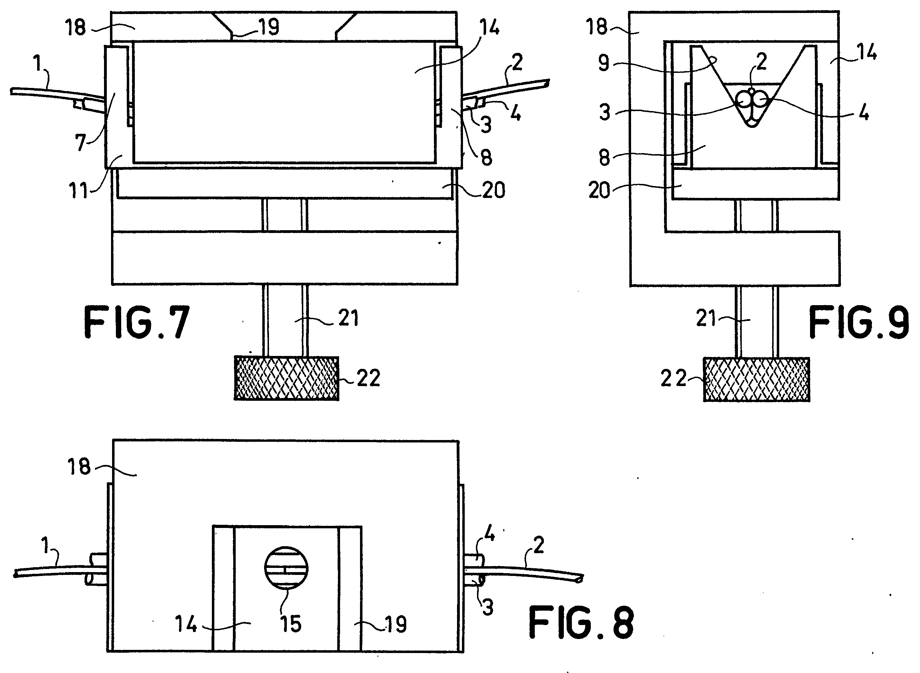

Un exemple de réalisation concret du dispositif de l'invention va maintenant être décrit au regard des figures 7 à 9 représentant les vues en élévation, en plan et de profil du dispositif d'aboutement de l'invention. Le bâti formant couvercle 14 est rendu solidaire d'un support 18 muni d'une vis de serrage 21. Une fenêtre 19 découvrant la fenêtre 15 est également pratiquée dans le support 18. Cette vis de serrage 21 entraîne un plateau 20 sur lequel est déposée l'embase 11. La vis 21 est munie d'une molette 22 d'entraînement. Lorsque cette vis est soumise à un mouvement de rotation, le plateau 20 et les éléments qui lui sont solidaires se rapprochent ou s'éloignent, selon le sens de rotation, du bâti couvercle 14. Il s'ensuit une compression ou une détente des ressorts 12 et 13 comme il a été décrit antérieurement. La molette 12 peut entraîner un disque gradué se déplaçant devant un index et permettant un dosage de l'amplitude de la force exercée par les ressorts, amplitude qui ne dépend que de l'écartement du bâti 14 et du plateau 20.

Les tiges de guidage 3 et 4 sont des pièces séparées du dispositif d'aboutement. En effet ces tiges sont amovibles et, c'est un avantage supplémentaire de l'invention, du fait de la forme en V de la gorge de maintien, le diamètre de ces tiges peut être choisi en fonction du diamètre des fibres à abouter. Il est d'ailleurs à noter que ces tiges sont rendues solidaires des fibres lorsque l'aboutement se fait par collage pour réaliser des jonctions fixes. Ces tiges de guidage peuvent être en acier trempé poli, pour éviter toutes aspérités préjudiciables au glissement des fibres, et par exemple être constituées par des tiges connues sous le nom de piges.

L'invention permet donc avec une simple manipulation (tourner une vis de serrage) de réaliser simultanément plusieurs opérations permettant l'aboutement de deux fibres optiques de façon répétitive, tout en offrant une sécurité maximum quant au bon déroulement de l'opération et sans risque de détérioration des fibres. D'autre part les manipulations initiales d'introduction des deux fibres à abouter dans le dispositif sont réduites à leur plus simple expression, ces deux fibres n'ayant pas à être positionnées de façon précise, ni même à être mises en contact l'une avec l'autre au début de l'opération. En outre aucun des composants nécessaires à la réalisation d'un dispositif d'aboutement selon l'invention ne fait appel, pour leur fabrication, à des techniques d'ajustage de précision et de ce fait, le dispositif peut être obtenu de façon simple et peu coûteuse.

L'invention n'est pas limitée aux exemples de réalisation qui viennent d'être décrits à titre d'illustration. Notamment, une des deux fibres peut être rendue solidaire du guidage ou dans son prolongement, dans ce cas un seul ressort suffit pour, d'une part, rapprocher la fibre optique mobile de la fibre fixe, et, d'autre part, assurer la flexion des tiges de guidage. Enfin un câble comportant plusieurs fibres peut être abouté fibre par fibre à un autre cable à l'aide d'un ou plusieurs dispositifs d'aboutement selon l'invention. Le système de couplage par vis de serrage peut également, pour sa part, être remplacé par un ressort assurant une pression calibrée entre les deux pièces mobiles ou par un levier réalisant cette fonction.

## Revendications

1. Dispositif d'aboutement de deux fibres optiques, comportant des moyens de guidage des fibres optiques à abouter (1, 2) comprenant une paire de tiges rectilignes jointives (3, 4) de section cylindrique formant un berceau de guidage dans lequel glissent les fibres optiques, et des moyens de pressage, caractérisé en ce que lesdits moyens de pressage agissent sur au moins un patin (5) en matériau élastique ; le patin exerçant simultanément une force d'entraînement $(F_1)$ sur une des deux fibres, la faisant glisser dans le berceau de guidage vers l'autre fibre à abouter, et une force de flexion $(F_{301}-F_{302})$ sur chacune des tiges, incurvant la paire de tiges.

2. Dispositif selon la revendication 1, caractérisé en ce que chaque patin (5, 6) est de dimension supérieure à la somme des diamètres des deux tiges pour les envelopper partiellement de façon à ce que, par l'effet de la déformation du matériau élastique, les forces de flexion $(F_{301}-F_{302})$ s'exercent sur les tiges dans des directions telles qu'elles maintiennent ces tiges jointives.

3. Dispositif selon la revendication 1, caractérisé en ce que les tiges (3, 4) sont en acier trempé poli.

4. Dispositif selon la revendication 1, caractérisé en ce qu'il comporte une embase (11) munie de deux parois latérales (7, 8) et en ce que des gorges (9, 10) pratiquées dans les parois latérales en forme de V maintiennent les tiges en leurs extrémités.

5. Dispositif selon la revendication 1, caractérisé en ce que chaque patin (5, 6) est fixé à l'aide d'un ressort en épingle à cheveux (12, 13) à un bâti (14) formant couvercle et mobile par rapport à l'embase (11), le bâti étant relié à l'embase par des moyens de couplage réglables et en ce que les ressorts ont leur partie coudée tournée vers l'extérieur et sont compris dans un plan parallèle à la direction des tiges (OY).

6. Dispositif selon la revendication 5, caractérisé en ce que les moyens de couplage comprennent une vis de serrage (21) solidaire d'une molette d'entraînement (22).

7. Dispositif selon la revendication 6, caractérisé en ce que la molette d'entraînement (22) est graduée et se déplace devant un index permettant de transmettre au patin par l'intermédiaire des ressorts en épingles à cheveux une force d'amplitude prédéterminée.

8. Dispositif selon la revendication 5, caractérisé en ce qu'en outre le bâti formant couvercle est muni d'une fenêtre d'observation (15).

9. Dispositif selon la revendication 8, caractérisé en ce que la fenêtre (15) d'observation permet également l'introduction d'un liquide destiné à l'enrobage ou au collage des fibres optiques à abouter (1, 2).

## Claims

1. Abutment device for two optical fibres, comprising guiding means for the optical fibres (1, 2) to be joined end to end including a pair of rectilinear mutually adjacent rods (3, 4) of cylindrical section forming a guiding cradle in which the optical fibres glide, and including pressing means, characterized in that said pressing means act on at least one shoe (5) of elastic material, the shoe exerting simultaneously a driving force $(F_1)$ on one of the two fibres, making it glide in the guiding cradle towards the other fibre to be abutted, and a bending force $(F_{301}-F_{302})$ on each of the rods, by which the pair of rods is incurved.

2. Device according to claim 1, characterized in that each shoe (5, 6) is of a dimension which is superior to the sum of diameters of the two rods in order to envelop them partially so that, by the effect of the deformation of the elastic material, the bending forces $(F_{301}-F_{302})$ are exerted on the rods in such directions that they maintain these rods in mutual contact.

3. Device according to claim 1, characterized in that the rods (3, 4) are made of polished hardened steel.

4. Device according to claim 1, characterized in that it comprises a base-plate (11) with two side walls (7, 8), and that V-shaped grooves (9, 10) which are worked in the lateral walls maintain the rods at their ends.

5. Device according to claim 1, characterized in that each shoe (5, 6) is fixed by means of a hairpin spring (12, 13) to a frame (14) which forms a cover and which is mobile with respect to the base-plate (11), the frame being connected to the base-plate by adjustable coupling means, and in that the springs have their bended part turned to the outside and are included in a plane which is parallel to the direction (OY) of the rods.

6. Device according to claim 5, characterized in that the coupling means comprise a squeezing screw (21) which is integral with a driving wheel (22).

7. Device according to claim 6, characterized in that the driving wheel (22) is graded and moves in front of an index allowing to transmit a force of a predetermined amplitude to the shoe via the hair-pin springs.

8. Device according to claim 5, characterized in that furtheron the frame forming cover is equipped with an observation window (15).

9. Device according to claim 8, characterized in that the observation window (15) equally allows the introduction of a liquid which is destined to coat or glue the optical fibres (1, 2) to be joined end to end.

**Ansprüche**

1. Vorrichtung zum Aneinanderfügen zweier optischer Fasern, die Führungsmittel für die aneinanderzufügenden optischen Fasern (1, 2) mit einem Paar aneinanderstoßender gerader Stangen (3, 4) zylindrischen Querschnitts, die ein Führungsbett bilden, in dem die optischen Fasern gleiten, und Preßmittel aufweist, dadurch gekennzeichnet, daß die Preßmittel auf mindestens ein Druckstück (5) aus elastischem Material einwirken, wobei das Druckstück gleichzeitig eine Antriebskraft ($F_1$) auf eine der beiden Fasern, die die Faser im Führungsbett in Richtung zur anderen zusammenzufügenden Faser gleiten läßt, und eine Biegekraft ($F_{301}$-$F_{302}$) auf jede der Stangen ausübt, die das Stangenpaar durchbiegt.

2. Vorrichtung nach Anspruch 1, dadurch gekennzeichnet, daß jedes Druckstück (5, 6) eine größere Abmessung aufweist als die Summe der Durchmesser der beiden Stangen, so daß es sie teilweise so umhüllt, daß durch die Wirkung der Verformung des elastischen Materials die Biegekräfte ($F_{301}$-$F_{302}$) sich auf die Stangen in solchen Richtungen auswirken, daß sie diese Stangen in gegenseitiger Berührung halten.

3. Vorrichtung nach Anspruch 1, dadurch gekennzeichnet, daß die Stangen (3, 4) aus poliertem, gehärtetem Stahl bestehen.

4. Vorrichtung nach Anspruch 1, dadurch gekennzeichnet, daß sie einen Sockel (11) mit zwei Seitenwänden (7, 8) aufweist, und daß V-förmige Kehlen (9, 10) in den Seitenwänden die Stangen an ihren Enden festhalten.

5. Vorrichtung nach Anspruch 1, dadurch gekennzeichnet, daß jedes Druckstück (5, 6) mit Hilfe einer haarnadelförmigen Feder (12, 13) an einem Rahmen (14) befestigt ist, der einen Deckel bildet und in Bezug auf den Sockel (11) beweglich ist, wobei der Rahmen mit dem Sockel über regulierbare Koppelmittel verbunden ist, und daß der geknickte Teil der Federn nach außen zeigt und sie sich in einer zur Richtung der Stangen parallelen Ebene (OY) befinden.

6. Vorrichtung nach Anspruch 5, dadurch gekennzeichnet, daß die Koppelmittel eine Spannschraube (21) aufweisen, die fest mit einem Antriebsrad (22) verbunden ist.

7. Vorrichtung nach Anspruch 6, dadurch gekennzeichnet, daß das Antriebsrad (22) in Grade eingeteilt ist und sich vor einem Index bewegt, der es ermöglicht, dem Druckstück über die Haarnadelfedern eine Kraft mit vorbestimmter Amplitude zu übermitteln.

8. Vorrichtung nach Anspruch 5, dadurch gekennzeichnet, daß der den Deckel bildende Rahmen außerdem mit einem Beobachtungsfenster (15) versehen ist.

9. Vorrichtung nach Anspruch 8, dadurch gekennzeichnet, daß das Beobachtungsfenster (15) ebenfalls die Einführung einer Flüssigkeit ermöglicht, die zum Umhüllen oder Verkleben der aneinanderzufügenden optischen Fasern (1, 2) bestimmt ist.

**FIG.1**

**FIG.3**

**FIG.2**

**FIG.4**

FIG. 5

FIG. 6

FIG.7

FIG.8

FIG.9